# EUROPÄISCHE PATENTANMELDUNG

(11) **EP 2 388 099 A2**
(43) Veröffentlichungstag der Anmeldung: **23.11.2011**
(21) Anmeldenummer: 11003692.8
(22) Anmeldetag: 05.05.2011
(51) Int. Cl.: B23K 26/02, B23K 26/42

(54) **Verfahren und Vorrichtung zum Ausrichten eines Laserkopfes**

(30) Priorität: 17.05.2010 DE 102010020732
(71) Anmelder: RENA GmbH, 78148 Gütenbach (DE)
(72) Erfinder: Niese, Matthias, 32318 Neumarkt (DE)
(74) Vertreter: Stürken, Joachim

(57) **Zusammenfassung**

Die erfindungsgemäße Vorrichtung (1) zum Ausrichten der Strahlachse (2) eines Laserkopfes (3) umfasst eine Aufnahme (8) für den Laserkopf (3), eine mindestens eine Stelleinheit (5A, 5B) umfassende Stellvorrichtung (4) zum Ausrichten der Strahlachse (2), sowie einen Stellhebel (7), dessen längliche Ausdehnung durch ein Festkörpergelenk (11) in zwei funktionelle Arme (7A,7B) unterteilt ist, wobei die Aufnahme (8) und die Stellvorrichtung (4) an den gegenüberliegenden Armen (7A,7B) des Stellhebels (7) angeordnet sind, und wobei die mindestens eine Stelleinheit (5A,5B) eine Stellachse (6A',6B') aufweist, die von der Strahlachse (2) verschieden ist.

## Beschreibung

### Einleitung

Die Erfindung betrifft eine Vorrichtung zum Ausrichten der Strahlachse eines Laserkopfes und ein Verfahren dazu. Insbesondere betrifft die Erfindung eine Vorrichtung und ein Verfahren, die einen automatisierten Prozess des Ausrichtens erlauben.

### Stand der Technik und Nachteile

Im Rahmen der Bearbeitung von laserbearbeitbaren Materialien ist es häufig notwendig, die Strahlachse des Laserkopfes exakt zu positionieren, um so eine vorbestimmte Lage des Brennflecks einzuhalten. Abweichungen, die der Brennfleck von dieser Sollposition nach dem Ersteinbau des Laserkopfes aufweist, liegen typischerweise in einer Bandbreite von ± 150 µm bzw. einem Radius von 150 µm um die Sollposition. Zum Ausgleich unvermeidbarer Fertigungstoleranzen des Laserkopfes oder damit verbundener Strahlführungsmittel ist daher häufig eine Ausrichtung der Strahlachse notwendig. Auch, wenn ein derartiger Laserkopf, beispielsweise für Wartungszwecke, ausgebaut oder ausgetauscht werden muss, ist nach dem Einbau eine erneute Ausrichtung notwendig. Zudem kann es passieren, dass sich die Position der Strahlachse auch während des laufenden Betriebs ändert, beispielsweise durch Setzprozesse oder Temperaturschwankungen. In diesem Fall muss die Produktionsanlage angehalten werden, bis die Strahlachse wieder nach entsprechender Neuausrichtung ihre Sollposition aufweist.

Bekannte Systeme nutzen hierzu gelenkig gelagerte Laserköpfe, welche mittels Schrauben an einer ggf. mehrere Laserköpfe haltenden Halterung befestigt sind. Ein Nachteil derartiger Lagerungen besteht jedoch in der Schwierigkeit, diese dauerhaft absolut spielfrei zu gestalten, ohne hierzu einen hohen Aufwand zu betreiben. Durch die Verwendung von Schrauben ist es, insbesondere im Falle des Vorhandenseins mehrerer parallel zu verwendender Laserköpfe, nötig, die gesamte Halterung auszubauen, auch wenn nur ein einziger Laserkopf ausgetauscht werden muss. Sollen alle Laserköpfe gemeinsam, beispielsweise in einer Flucht, ausgerichtet sein, so muss diese Ausrichtung auf einer separaten Justierplattform erfolgen, die außerhalb der Produktionsanlage angeordnet ist.

Die Offenlegungsschrift DE 197 25 257 A1 schlägt eine "Vorrichtung zum Verbinden und Justieren zweier Bauteile von Lasereinrichtungen" vor, bei welcher zur Vermeidung von Gelenkspiel ein Festkörpergelenk eingesetzt wird. Zur Verstellung des Kippwinkels sind je Kippachse zwei Zug- und/oder Druckelemente vorgesehen. Für einen funktionsgemäßen Betrieb müssen diese immer so eingestellt und aufeinander abgestimmt sein, dass sie einerseits den erwünschen Kippwinkel erzielen, ohne sich gegenseitig zu blockieren, und gleichzeitig das Gelenk weder unter Zug noch Druck setzen. Dies erschwert auch eine mögliche Automatisierbarkeit, da jeweils beide Zug- und/oder Druckelemente jederzeit aufeinander abgestimmt sein müssen. Zudem ist die vorgeschlagene Anordnung für die Anwendung bei beengten Platzverhältnissen ungeeignet. Da sich die Verstellvorrichtung in einer Ebene senkrecht zur Strahlachse des Lasers befindet, sollte sie nicht über dessen Breite hinausragen. Diese Bauweise limitiert wiederum das Ausnutzen einer möglichen Hebelwirkung und somit eine Feinjustage der Stahlachse mittels der Zug- und/oder Druckmittel.

### Aufgabe der Erfindung und Lösung

Der Erfindung liegt daher die Aufgabe zu Grunde, einen einfachen und schnellen Austausch eines einmal ausgerichteten Laserkopfes zu ermöglichen, ohne diesen nach dem Einbau erneut ausrichten zu müssen. Ferner liegt der Erfindung die Aufgabe zu Grunde, eine Nach-Ausrichtung des Laserkopfes ohne Ausbau desselben auch während des laufenden Betriebs einer Produktionsanlage zu ermöglichen. Zudem legt der Erfindung die Aufgabe zu Grunde, den Laserkopf mit möglichst geringem Aufwand dauerhaft absolut spielfrei zu lagern.

Die Aufgabe wird durch Bereitstellung der Vorrichtung gemäß Anspruch 1, des Multi-Laserblocks gemäß Anspruch 16 sowie des Verfahrens gemäß Anspruch 9 gelöst. Vorteilhafte Ausführungsformen sind in den abhängigen Ansprüchen, der Beschreibung sowie den Figuren genannt.

### Beschreibung

Die Erfindung offenbart eine Vorrichtung zum Ausrichten der Strahlachse eines Laserkopfes. Erfindungsgemäß umfasst diese Vorrichtung eine Aufnahme für den Laserkopf, eine mindestens eine Stelleinheit umfassende Stellvorrichtung zum Ausrichten der Strahlachse, sowie einen Stellhebel. Diese Vorrichtungsbestandteile werden nachfolgend genauer erläutert.

Die Aufnahme für den Laserkopf dient der Fixierung desselben an der erfindungsgemäßen Vorrichtung. Der Laserkopf selber ist hingegen nicht Bestandteil der Vorrichtung, ihr jedoch funktionell zugeordnet.

Erfindungsgemäß umfasst die erfindungsgemäße Vorrichtung eine mindestens eine Stelleinheit umfassende Stellvorrichtung zum Ausrichten der Strahlachse. Unter Verwendung der Stellvorrichtung werden Stellbewegungen in Richtung mindestens einer Stellachse erzeugt. Erfindungsgemäß ist vorgesehen, dass die mindestens eine Stellachse von der Strahlachse verschieden ist. Das bedeutet, dass keine dieser Achsen zu einer anderen kollinear verläuft.

Ferner umfasst sie einen Stellhebel, an dessen einem Ende die Stellvorrichtung, und an dessen anderem Ende eine Aufnahme für den der Laserkopf angeordnet ist. Die längliche Ausdehnung des Stellhebels ist durch ein Festkörpergelenk in zwei funktionelle Arme unterteilt. Das Festkörpergelenk definiert einen Drehbereich. Demnach sind die Aufnahme und die Stellvorrichtung an den gegenüberliegenden Armen des Stellhebels angeordnet. Verläuft die Strahlachse annähernd senkrecht, so befindet sich definitionsgemäß das eine Ende im oberen Bereich des Stellhebels, und das andere Ende im unteren Bereich desselben. Selbstverständlich ist jedoch auch ein Betrieb mit einer beispielsweise horizontal verlaufenden Strahlachse möglich, so dass die beiden Enden z.B. links und rechts angeordnet sind. Ferner ist auch ein Stellhebel möglich, welcher keine längliche Ausdehnung aufweist. Wesentlich ist nur, dass er in zwei Hebelarme aufteilbar ist, die durch die Lage des Festkörpergelenks bzw. dessen Drehbereiches definiert sind.

Da der Stellhebel definitionsgemäß eine Hebelwirkung entfalten muss, benötigt derselbe einen Drehpunkt. Erfindungsgemäß findet hierzu, wie vorstehend bereits erwähnt, ein Festkörpergelenk Verwendung, welches sich am Übergang vom ersten zum zweiten Arm des Stellhebels befindet. Durch Verwendung eines Festkörperanstelle beispielsweise eines Scharniergelenks wird ein dauerhaft absolut spielfreies Gelenk bereitgestellt. Zudem ist ein derartiges Gelenk einfach herzustellen, da es keinerlei bewegte Teile umfasst. Ein weiterer Vorteil ergibt sich dadurch, dass es die Vorspannung des Stellhebels in Verbindung mit dem Festkörpergelenk erlaubt, auf Gegenfedern, welche einer Stellbewegung entgegenwirken, um diese spielfrei zu halten, verzichtet werden kann. Je nach konkreter Ausgestaltung des Festkörpergelenks konzentriert sich die eigentliche Gelenkfunktion auf einen klar umgrenzten Punkt (Drehpunkt), oder verteilt sich über einen größeren Bereich des Festkörpergelenks (Drehbereich). Unabhängig davon resultiert jedoch das Aufbringen einer Stellbewegung am einen Ende des Stellhebels immer in einer Positionsveränderung der am anderen Ende angeordneten Aufnahme für den Laserkopf. Die genaue Lage des Drehpunkts bzw. Drehbereiches ist hierbei von untergeordneter Bedeutung, sofern sie reproduzierbar ist. Die Form des Festkörpergelenks kann gestreckt, gebogen oder spiralförmig verlaufen. Sein Querschnitt kann beispielsweise rund oder rechteckig, und er kann entlang der Längserstreckung unterschiedlich ausgebildet sein.

Nach einer bevorzugten Ausführungsform ist vorgesehen, dass sowohl die Stellachse(n) als auch die Strahlachse senkrecht zueinander stehen. Das bedeutet, dass die ggf. drei Achsen mit den drei Raumrichtungen eines rechtwinkligen Koordinatensystems übereinstimmen. Wenn zusätzlich die Bedingung erfüllt ist, dass eine der beiden Stellbewegungen in bzw. entgegen einer linearen Transportrichtung der zu bearbeitenden Gegenstände weist, ergibt sich dadurch eine besonders einfache Bestimmung der Stellbewegungen, die zur Reduzierung einer bekannten Soll-Ist-Abweichung notwendig sind.

Je nach Ausrichtung der Stellbewegungen wird das Festkörpergelenk gebogen und/oder tordiert. Daher kann auch von einem Biege-Torsionsgelenk gesprochen werden. Das Festkörpergelenk ist demnach gemäß einer bevorzugten Ausführungsform durch ein Biege-Torsionsgelenk gebildet, welches an seinem einen Ende fest mit dem Stellhebel verbunden und mit seinem anderen Ende an einem Widerlager fixierbar ist. Das Festkörpergelenk kann am Stellhebel angeschraubt, angeschweißt oder angeklebt sein, und aus demselben oder einem anderen Material als der Stellhebel bestehen. Es kann außerdem einstückig mit dem Stellhebel ausgebildet sein.

Da das erfindungsgemäß bevorzugte Festkörpergelenk eine gerade oder gebogene Stabform aufweist, muss dasjenige Ende, welches nicht mit dem Stellhebel verbunden ist, als Widerlager dienen, damit sich die erfindungsgemäß vorgesehene Gelenkfunktion einstellen kann. Hierzu ist dieses Ende mit einem Teil der Fertigungsanlage derart verbunden, dass es fest eingespannt ist. Das andere Ende hingegen kann zusammen mit dem Stellhebel in gewissen Grenzen frei schwingen.

Nach einer besonders bevorzugten Ausführungsform ist die Aufnahme für den Laserkopf als Schnellwechselverschluss ausgebildet. Hierzu sind verschiedene Konstruktionen denkbar. Besonders bevorzugt umfasst ein derartiger Schnellwechselverschluss einen Vorsprung, der sich am unteren Ende des Stellhebels in Richtung des Laserkopfes erstreckt und eine definierte Anlegekante bereitstellt, sowie einem in Längsrichtung des Stellhebels verschiebbaren und an diesem fixierbaren Verschlussmechanismus. Die genaue Wirkungsweise ist im Rahmen der Figurenbeschreibung aufgeführt, auf die verwiesen wird.

In bestimmten Anwendungsfällen kann es notwendig sein, flüssige und/oder gasförmige Medien wie z.B. Phosphorsäure oder Helium an den Laserkopf zu bringen. Dazu ist nach einer besonders bevorzugten Ausführungsform vorgesehen, dass das Festkörper- bzw. Biege-Torsionsgelenk mindestens einen Medienkanal aufweist.

Dieser Medienkanal verfügt über geeignete fluidische Schnittstellen, die einen verlustfreien Übergang der Medien sowohl in den Medienkanal hinein als auch aus diesem heraus erlauben. Ein wesentlicher Vorteil dieser Konstruktion besteht darin, dass beim Austausch eines Laserkopfes keine zusätzlichen Schritte zur Ankopplung entsprechender Medienzuführungen notwendig sind. Daraus resultiert eine schnellere und sicherere Vorgehensweise im Falle eines Austauschs.

Um die Verstellbarkeit der Stelleinheit(en) zu gewährleisten, ist vorgesehen, dass die mindestens eine Stelleinheit eine Rändelschraube und/oder einen motorischen Antrieb umfasst, wobei Letzterer bevorzugt ist, da somit eine Automatisierung des Ausrichtvorgangs möglich wird.

Nach einer weiteren Ausführungsform umfasst die Stellvorrichtung lediglich eine Stelleinheit mit einem Exzenter-Motor. Dieser ist derart am einen Ende des Stellhebels angeordnet und wirkt mit diesem zusammen, dass durch eine Taumelbewegung sowohl Stellbewegungen in bzw. entgegen einer Transportrichtung, als auch quer zu derselben und in Kombinationen dieser Richtungen möglich sind.

Nach einer weiteren Ausführungsform ist der Drehbereich derart angeordnet, dass zwischen Stellvorrichtung und einem Schnittpunkt der Strahlachse des Laserkopfes mit einer Bearbeitungsebene ein Hebelverhältnis von 10:1 herstellbar ist. Dadurch ergibt sich eine Untersetzung der Stellbewegung auf die Bewegung des Laserkopfes. Dabei ist zu beachten, dass sich das Hebelverhältnis nicht auf das Verhältnis der Länge der beiden Arme des Stellhebels zueinander bezieht, sondern dass die Länge des zweiten (unteren) Arms durch den Abstand des Drehbereiches von der eigentlichen Bearbeitungsebene ersetzt wird. Je nach gewünschter Ausrichtgenauigkeit kann das Hebelverhältnis auch kleiner oder größer als 10:1 sein.

Damit eine Automatisierung und Präzisierung des Ausrichtvorgangs möglich ist, sieht eine besonders bevorzugte Ausführungsform vor, dass die erfindungsgemäße Vorrichtung ferner eine optische Messeinrichtung zur Bestimmung der Ausrichtung des Laserkopfes, und/oder eine Steuerung zur Ansteuerung und ggf. Regelung der Stellvorrichtung umfasst. Wie weiter oben bereits ausgeführt, kann diese optische Messeinrichtung zur direkten Bestrahlung durch den Laserstrahl oder zur zeitversetzten Aufnahme der vom Strahl herrührenden Markierung(en) geeignet sein. Auch eine Kombination beider Varianten in einer Vorrichtung ist möglich. Durch Zusammenarbeit mit einer Steuerung für die Stellvorrichtung kann so ein Regelkreis geschaffen werden, der eine weitgehend selbsttätige Ausrichtung der Strahlachse des Laserkopfes erlaubt.

Erfindungsgemäß ist vorgesehen, dass das Verfahren zum Ausrichten der Strahlachse eines Laserkopfes unter Verwendung einer Vorrichtung durchgeführt wird, die eine Aufnahme für den Laserkopf, eine mindestens eine Stelleinheit umfassende Stellvorrichtung zum Ausrichten der Strahlachse, sowie einen Stellhebel umfasst, dessen längliche Ausdehnung durch ein Festkörpergelenk in zwei funktionelle Arme unterteilt ist, wobei die Aufnahme und die Stellvorrichtung an den gegenüberliegenden Armen des Stellhebels angeordnet sind, und wobei die mindestens eine Stelleinheit eine Stellachse aufweist, die von der Strahlachse verschieden ist. Eine derartige Vorrichtung wurde bereits vorstehend detailliert beschrieben. Erfindungsgemäß umfasst das erfindungsgemäße Verfahren folgende Schritte:
(a) Einbringen des Laserkopfes in die Aufnahme;
(b) Bestimmen der Soll-Ist-Abweichung der Strahlachse des Laserkopfes;
(c) Bestimmen von zur Verringerung dieser Abweichung notwendigen Stellbewegungen;
(d) Ausrichten der Strahlachse durch Ansteuern der Stellvorrichtung zur Erzeugung dieser Stellbewegungen und Übersetzen der Stellbewegungen über die beiden Arme des Stellhebels auf den in der Aufnahme angeordneten Laserkopf.

Es ist klar, dass vor der Durchführung der auf die Ausrichtung der Strahlachse bezogenen Verfahrensschritte (b) bis (d) gemäß Schritt (a) auch ein Laserkopf in die erfindungsgemäße Vorrichtung eingesetzt worden sein muss. Es ist auch klar, dass dies für den Fall entfällt, in welchem der Laserkopf bereits an der Vorrichtung angeordnet ist, beispielsweise weil eine derartig ausgestattete Vorrichtung in einer vormontierten, aber noch nicht ausgerichteten Form angeboten wird.

Die in Schritt (b) durchzuführende Soll-Ist-Abweichung ergibt sich aus der Ortsdifferenz eines vorgegebenen Sollwertes von einem messtechnisch zu erfassenden Ist-Wert. Der Ist-Wert kann beispielsweise der Winkel der Strahlachse sein. Bevorzugt ist er jedoch ein X- oder X-Y-Wert, der die Position eines Schnittpunktes von Strahlachse und der Bearbeitungsebene angibt, wobei die Bearbeitungsebene dadurch definiert ist, dass im Betrieb der Laserstrahl in ihr auf ein laserbearbeitbares Material auftrifft.

Die Bestimmung der Lage der Strahlachse kann bevorzugt mittels numerischer Verfahren erfolgen, sofern die Geometrie der entsprechenden Vorrichtungsbestandteile und die Entfernung zwischen Laserkopf und Bearbeitungsebene bekannt ist, was gewöhnlich auch der Fall ist. Ebenso erfolgt die in Schritt (c) erwähnte Bestimmung einer entsprechenden Ausgleichsbewegung bevorzugt numerisch. Alternativ kann diese Bestimmung auch durch manuelles Probieren erfolgen.

Sofern die Soll-Ist-Abweichung und die zu ihrer Verringerung notwendigen Stellbewegungen bekannt sind, wird gemäß Schritt (d) zur Erzeugung dieser Stellbewegungen eine Stellvorrichtung angesteuert, die im Rahmen der Beschreibung der erfindungsgemäßen Vorrichtung detailliert erläutert werden wird.

Über den durch die beiden Arme des Stellhebels gebildeten Hebelmechanismus werden schließlich die Stellbewegungen, der bevorzugt eine Untersetzung ist, auf den in einer Aufnahme angeordneten Laserkopf übersetzt und somit die Ausrichtung seiner Strahlachse erreicht. Erfindungsgemäß ist dabei vorgesehen, dass die beiden Hebelarme durch ein einen Drehbereich definierendes Festkörpergelenk gebildet werden. Durch die Verwendung eines Festkörpergelenks wird ein dauerhaft spielfreier Betrieb des Hebelmechanismus' gewährleistet. Die Aufnahme für den Laserkopf ist besonders bevorzugt als Schnellwechselmechanismus ausgestaltet. Somit ist ein einfaches und schnelles Wechseln eines Laserkopfes möglich.

Erfindungsgemäß existieren zwei bevorzugte Ausführungsformen, nach denen die Soll-Ist-Bestimmung erfolgt.

Nach einer ersten Ausführungsform werden dazu die folgenden Schritte ausgeführt:
(b1) Einbringen von laserbearbeitbarem Material in eine senkrecht zur Strahlachse des Laserkopfes liegende Bearbeitungsebene;
(b2) Ansteuern des Laserkopfes, so dass sich in einem Schnittpunkt von Strahlachse und Bearbeitungsebene auf dem laserbearbeitbaren Material eine Markierung ergibt;
(b3) Ermitteln der Ist-Position der Markierung;
(b4) Bestimmen der Abweichung der Ist-Position von einer Sollposition.

Mit anderen Worten wird ein mittels des Laserstrahls veränderbares Material in eine Fertigungsanlage eingebracht, in welche die erfindungsgemäße Vorrichtung eingebaut ist. Mittels einer "Testbearbeitung" wird eine Marke erzeugt, welche im Betrieb dem Brennfleck des Laserkopfes entspricht. Durch manuelles oder automatisiertes Erfassen der Position der Marke kann im Vergleich mit einem Sollwert ermittelt werden, welche Stellbewegungen nötig sind, um den tatsächlich erreichten Ist-Wert mit dem gewünschten Sollwert in Übereinstimmung zu bringen.

Nach einer anderen, bevorzugten Ausführungsform werden zur Soll-Ist-Bestimmung die folgenden Schritte ausgeführt:
(b1) Einbringen einer optischen Messeinrichtung in eine senkrecht zur Strahlachse des Laserkopfes liegende Bearbeitungsebene;
(b2) Ansteuern des Laserkopfes derart, dass sich in einem Schnittpunkt von Strahlachse und Bearbeitungsebene auf der optischen Messeinrichtung ein Signal der Ist-Position des Schnittpunktes ergibt;
(b3) Bestimmen der Abweichung der Ist-Position von einer Sollposition.

Gemäß dieser Ausführungsform wird also keine Marke erzeugt, sondern die Messung wird durch Bestrahlen einer entsprechenden optischen Messeinrichtung ohne den Umweg über ein laserbearbeitbares Material durchgeführt. Ggf. ist es dazu notwendig, die Leistung des Lasers zu verringern, einen Filter in den Strahlengang einzubringen, oder einen leistungsarmen Pilotstrahl zu verwenden, um die optische Messeinrichtung nicht zu beschädigen. Das Messsignal korreliert dann direkt mit der Ist-Position des Brennflecks, sofern die optische Messeinrichtung mit ihrer Messfläche in der Bearbeitungsebene liegt. Besonders vorteilhaft ist nach dieser Ausführungsform, dass unmittelbar elektrische Signale vorliegen. Dadurch lässt sich auf einfache Weise ein Regelkreis bilden, welcher die optische Messeinrichtung, eine optional vorzusehende Steuerung und die Stellvorrichtung umfasst.

Besonders bevorzugt ist ferner vorgesehen, dass in einem nachfolgenden Schritt bestimmt wird, ob die Abweichung der Ist-Position von der Sollposition kleiner als ein vorbestimmter Grenzwert ist, und dass alle Schritte so oft nacheinander durchgeführt werden, bis der Grenzwert erreicht oder unterschritten wird. Es wird also nach jeder Iteration überprüft, ob die verbleibende Abweichung einen vorbestimmten Grenzwert unterschreitet, und erst bei Unterschreiten des Grenzwertes wird die sich wiederholende Schleife beendet. Es ist klar, dass der oben dargestellte Schritt (a) des Einbringen des Laserkopfes in die Aufnahme nur einmal, nämlich vor der Durchführung der übrigen Schritte, zu erfolgen hat.

Für den bevorzugten Fall der Verwendung einer optischen Messeinrichtung erfolgt diese iterative Ausrichtung quasi in Echtzeit, da laufend gemessen, berechnet und verstellt werden kann.

Wie bereits erwähnt, ist es besonders bevorzugt, dass das Bestimmen der zur Verringerung der Abweichung notwendigen Stellbewegung(en) und/oder das Ansteuern der Stellvorrichtung sowie ggf. das Bestimmen der Soll-Ist-Abweichung automatisiert erfolgt. Diese Automatisierung ist sowohl nach der Ausführungsform, in welcher laserbearbeitbares Material markiert wird, als auch nach der Ausführungsform mit einer unmittelbar bestrahlten optischen Messeinrichtung möglich. Hierzu muss jedoch auch im ersten Fall eine optische Messeinrichtung vorgesehen werden. Diese wird aber nicht direkt bestrahlt, sondern erfasst die Lage des oben genannten Schnittpunkts zeitversetzt, also nachdem das laserbearbeitbare Material den Wirkungsbereich des Lasers verlassen hat. Besonders hierfür geeignet sind Messkameras, beispielsweise Zeilenkameras, in Verbindung mit einer digitalen Bildverarbeitung.

Zur Ausrichtung der Strahlachse eines Laserkopfes bieten sich zwei Varianten an.

Nach einer Ausführungsform erfolgt das Ausrichten der Strahlachse vor dem Einbau des Laserkopfes in eine Produktionsanlage. Dies ist besonders dann von Vorteil, wenn eine Mehrzahl ausgerichteter Laserköpfe bereitgehalten werden muss, um die Ausfallzeit einer Produktionsanlage möglichst gering zu halten, und wenn die Ausrichtung eines Laserkopfes zumindest teilweise manuell erfolgt.

Nach einer anderen Ausführungsform erfolgt das Ausrichten der Strahlachse nach dem Einbau des Laserkopfes in eine Produktionsanlage. Insbesondere für den Fall einer automatisierten Ausrichtung sind hierbei kaum Zeitnachteile zu erwarten.

Ferner kann es auch notwendig sein, die Strahlachse nach erfolgter Erst-Ausrichtung erneut auszurichten. Daher ist nach einer weiteren Ausführungsform vorgesehen, dass das Ausrichten der Strahlachse während des Betriebs in einer Produktionsanlage erfolgt. Das bedeutet, dass die Position des oben genannten Schnittpunkts bzw. Brennflecks intermittierend oder kontinuierlich überwacht und, falls notwendig, unmittelbar korrigiert wird.

Besonders bevorzugt ist dabei vorgesehen, dass das Ausrichten der Strahlachse während des fortlaufenden Transports von laserbearbeitbarem Material erfolgt und die Markierung linienförmig ist. Auch in diesem Fall kann eine direkt bestrahlbare optische Messeinrichtung verwendet werden, die allerdings nur bei Auftreten einer Lücke zweier aufeinander folgender Materialabschnitte ein Messsignal liefern kann. Soll die Position des Brennflecks kontinuierlich überwacht werden, oder befindet sich beispielsweise Endlosmaterial in der Produktionsanlage, so eignet sich in diesem Fall insbesondere die oben genannte optische Messeinrichtung zum zeitversetzten Bestimmen der Ist-Position.

Die Erfindung offenbart außerdem einen Multi-Laserblock für eine Produktionsanlage zur Erzeugung von selektiven Emitterbahnen auf Solarzellen. Ein derartiger Multi-Laserblock dient der Zusammenfassung mehrerer Laserköpfe und deren Stellvorrichtungen zu einer leichter handhabbaren Einheit. Dementsprechend umfasst ein erfindungsgemäßer Multi-Laserkopf eine Mehrzahl nebeneinander angeordneter Vorrichtungen gemäß obiger Definition, wobei jede dieser Vorrichtungen einzeln ausrichtbar ist. Auf diese Weise kann jeder der Laserköpfe ohne einen Ausbau aus der Fertigungsanlage und ohne einen längeren Stillstand derselben ausgerichtet werden.

Das erfindungsgemäße Verfahren und die erfindungsgemäße Vorrichtung bieten gegenüber den Stand der Technik eine Reihe von Vorteilen. Durch die Verwendung eines Festkörpergelenkes anstelle eines herkömmlichen Scharniergelenks ist ein dauerhaft absolut spielfreies Gelenk bereitgestellt. Die ihm innewohnende Vorspannung erlaubt einen Verzicht auf Gegenfedern im Bereich der Stelleinheiten. Durch Verwendung eines Schnellwechselverschlusses ist ein schnelles Austauschen eines einzelnen Laserkopfes möglich. Durch Vorsehen einer entsprechender Anlegekante am Stellhebel sowie entsprechender, geometrischer Merkmale des Laserkopfes, die mit ihr zusammenwirken, entfällt die erneute Ausrichtung des Laserkopfes nach dem Einbau. Mittels der vorzugsweise automatischen Ausrichtung und in Verbindung mit einer optischen Messeinrichtung ist es möglich, auch im laufenden Betrieb eine Nach-Ausrichtung der Strahlachse des Laserkopfes zu erreichen.

### Figurenbeschreibung

- **Figur 1**: zeigt einen Multi-Laserblock mit einer Mehrzahl erfindungsgemäßer Vorrichtungen.
- **Figur 2**: zeigt als Detail einer erfindungsgemäßen Vorrichtung manuell betätigbare Rändelschrauben.
- **Figur 3**: zeigt verschiedene Strahlachsen, die unter Verwendung einer erfindungsgemäßen Vorrichtung erzielbar sind.
- **Figur 4**: zeigt das Biege-Torsionsgelenk einer erfindungsgemäßen Vorrichtung mit zwei darin verlaufenden Medienkanälen.

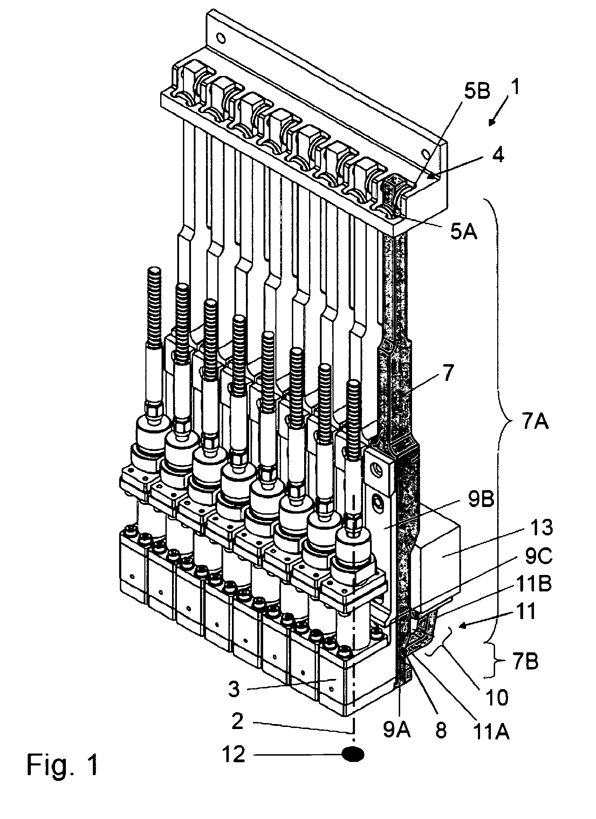

Eine einzelne Vorrichtung des in **Figur 1** gezeigte Zusammenbaus eines Multi-Laserblockes ist zur besseren Visualisierung etwas dunkler dargestellt.

Im oberen Bereich der Vorrichtung 1 befindet sich die Stellvorrichtung 4. Diese umfasst zwei Stelleinheiten 5A, 5B, welche als Rändelschrauben ausgebildet sind. Die Rändelschrauben befinden sich am oberen Ende eines Stellhebels 7. Am unteren Ende des Stellhebels 7 ist ein Laserkopf 3 angeordnet. Dieser ist mittels einer Aufnahme 8, die als Schnellwechselverschluss ausgeführt ist, lösbar am Stellhebel 7 befestigt. Der Schnellwechselverschluss besteht im Wesentlichen aus einem Vorsprung 9A, der sich am unteren Ende des Stellhebels 7 in Richtung des Laserkopfes 3 erstreckt und eine definierte Anlegekante bereitstellt, sowie einem in Längsrichtung des Stellhebels 7 verschiebbaren und an diesem fixierbaren Verschlussmechanismus 9B. Zum Einbau des Laserkopfes 3 in den Multi-Laserblock wird der Laserkopf 3 zunächst mit dem Vorsprung 9A in Eingriff gebracht. Dann wird der Laserkopf 3 so ausgerichtet, dass seine eine Rückwand flächig am Stellhebel 7 anliegt. Anschließend wird der Verschlussmechanismus 9B entlang der Längsrichtung des Stellhebels 7 solange in Richtung des Laserkopfes 3 bewegt, bis der Laserkopf 3 vom Verschlussmechanismus 9B geklemmt und somit am Stellhebel 7 fixiert wird. Hierzu umfasst der Verschlussmechanismus 9B einen Klemmvorsprung 9C, welcher mit einer oberen Kante des Laserkopfes 3 zusammenwirkt. Abschließend wird der Verschlussmechanismus 9B seinerseits mittels einer Schraube am Stellhebel 7 fixiert. Auf diese Weise ist ein einfaches und schnelles Austauschen eines einzelnen Laserkopfes 3 möglich, ohne dessen Strahlachse 2 (strichpunktierte Linie) erneut einstellen zu müssen.

In der Nähe seines unteren Endes ist am Stellhebel 7 ein Festkörpergelenk 11 angeordnet, welches die Funktion eines Drehgelenkes erfüllt. Dieses definiert bzw. umfasst einen Drehbereich 10. Das Festkörpergelenk 11 wird in der dargestellten Ausführungsform durch ein als Biege-Torsionsgelenk gebildet bzw. ist von diesem umfasst. Das Biege-Torsionsgelenk 11 ist an seinem einen Ende 11A fest mit dem Stellhebel 7 verbunden und mit seinem anderen Ende 11B an einem Widerlager fixierbar. In der dargestellten Ausführungsform ist das andere Ende 11B an einem Versorgungsblock 13 fixiert, der seinerseits fest mit der umgebenden Fertigungsanlage (nicht dargestellt) verbunden ist und somit ein Widerlager für das Biege-Torsionsgelenk 11 und den damit verbundenen Stellhebel 7 bildet.

Eine durch den Drehbereich 10 verlaufende und senkrecht auf der Längsachse des Stellhebels 7 stehende Ebene teilt den Stellhebel 7 in zwei Arme, nämlich einen ersten Arm 7A und einen zweiten Arm 7B. Das Hebelverhältnis zwischen diesen beiden Armen 7A, 7B ist so bemessen, dass zwischen Stellvorrichtung 4 und dem Brennpunkt, der einem Schnittpunkt 12 der Strahlachse 2 des Laserkopfes 3 mit einer Bearbeitungsebene (nicht gezeigt) entspricht, ein Hebelverhältnis von 10:1 hergestellt wird. Es ist dabei nicht nötig, dass der Drehbereich 10 exakt auf der Längsachse des Stellhebels 7 oder der Strahlachse 2 des Laserkopfes 3 angeordnet ist; er kann, wie gezeigt, auch außerhalb dieser Achsen positioniert sein. Da der Laserkopf 3 an dem unteren Teil des Stellhebels 7 fixiert ist, wirken sich Änderungen der Lage des zweiten Arms 7B unmittelbar auch auf die Lage des Laserkopfes 3 und somit seiner Strahlachse 2 aus. Somit bewirkt eine Bewegung der am einen Ende des Stellhebels 7 angeordneten Stelleinheiten 5A, 5B eine Verschiebung des Brennpunktes 12 im Verhältnis 10:1, so dass eine feine Ausrichtung der Lage des zweiten Arms 7B und somit des Brennpunktes 12 möglich ist. Die zur Ausrichtung benötigte Vorspannung wird dabei durch das Material des Stellhebels 7 selbst erzeugt, der beim Ausrichten kontrolliert verbogen wird. Dank dieser Vorspannung benötigen die Rändelschrauben keine Kontermuttern, Gegenfedern oder Ähnliches.

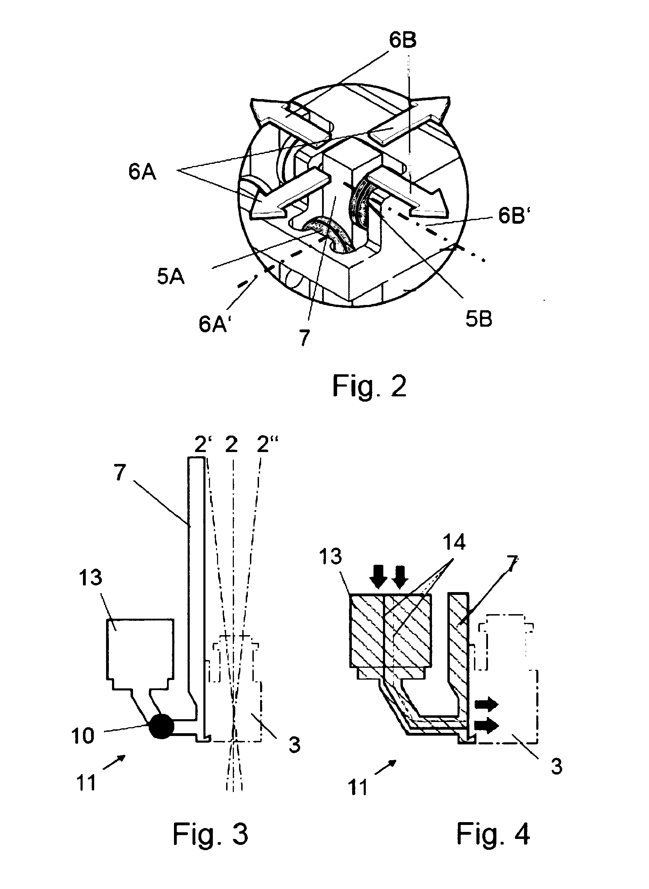

Die **Figur 2** zeigt ein Detail einer erfindungsgemäßen Vorrichtung 1. Die Ansichtsrichtung entspricht dabei derjenigen aus der Figur 1. Durch Drehen der Stelleinheit 5A wird der Stellhebel 7, dessen eines, oberes Ende zu erkennen ist, in Richtung der Stellbewegung 6A gebogen. Die Stellkraft wirkt dabei entlang der Stellachse 6A'. Für den Fall, dass der Transport eines Substrates (nicht dargestellt) in Richtung der Stellachse 6A' erfolgt, lässt sich die Strahlachse des Laserkopfes (beides nicht dargestellt) in bzw. entgegen dieser Transportrichtung verstellen.

Durch Drehen der Stelleinheit 5B wird der Stellhebel 7 hingegen in Richtung der Stellbewegung 6B und somit quer zur Richtung der Stellbewegung 6A gebogen. Die Stellkraft wirkt in Richtung der Stellachse 6B'. Daraus resultiert, dass die Strahlachse des Laserkopfes (beide nicht dargestellt) quer zu besagter Transportrichtung verstellt wird. Auf diese Weise lässt sich die Spur eines einzelnen Laserkopfes, aber auch der seitliche Abstand mehrerer Laserköpfe zueinander einstellen. Zudem stehen in der dargestellten Ausführungsform sowohl die Stellachsen 6A', 6B' als auch die Strahlachse senkrecht zueinander. Somit ist eine besonders einfache Vorausberechnung von Stellbewegungen möglich, beispielsweise im Rahmen einer automatischen Regelung, die auf einem Soll-Ist-Vergleich zwischen einer gewünschten und der tatsächlichen Lage eines Brennflecks auf einem laserbearbeitbaren Material beruht. In einer nicht dargestellten Variante sind dazu die Rändelschrauben durch motorische Antriebe ersetzt.

In der **Figur 3** ist die Möglichkeit illustriert, verschiedene Strahlachsen einzustellen, die unter Verwendung einer erfindungsgemäßen Vorrichtung erzielbar sind. Dargestellt ist der Stellhebel 7, das als Biege-Torsionsgelenk ausgebildete Festkörpergelenk 11 mit dem als ausgefüllter Kreis dargestellten Drehbereich 10, ein als Widerlager dienender Versorgungsblock 13, der strichpunktierte Umriss des Laserkopfes 3 sowie drei ebenfalls strichpunktiert dargestellte Strahlachsen 2, 2', 2". Durch Betätigen der Stellvorrichtung (nicht dargestellt) kann die als Senkrechte gezeigte Strahlachse 2 in eine entsprechend ausgelenkte Strahlachse 2' bzw. 2" überführt werden. Zwar liegt der Drehbereich 10 des Festkörpergelenkes 11 nicht im Schnittpunkt der drei Strahlachsen 2, 2', 2" bzw. im Inneren des Laserkopfes 3; dies ist jedoch, wie dargestellt, unschädlich, da die ausgelenkten Strahlachsen 2', 2" auch durch ein Verkippen des Laserkopfes 3 um den in Fig. 3 gezeigten Drehbereich 10 erreichbar sind.

Die **Figur 4** zeigt als Detail eine Schnittansicht einer besonders bevorzugten Ausführungsform des Biege-Torsionsgelenks 11 einer erfindungsgemäßen Vorrichtung. Dieses umfasst mehrere (hier: zwei) darin verlaufende Medienkanäle 14. Die Medienkanäle 14 verlaufen ferner durch den Versorgungsblock 13 und anschließend durch das Festkörpergelenk 11. Sie enden an der Anlagefläche des Stellhebels 7, die für den als strichpunktierter Umriss gezeigten Laserkopf 3 vorgesehen ist. Von diesem werden die in den Medienkanälen transportierten Medien dann aufgenommen. Dort dienen sie beispielsweise zur Strahlformung und/oder Bearbeitungsunterstützung (jeweils nicht dargestellt).

### Bezugszeichenliste

- 1: Vorrichtung
- 2: Strahlachse
- 3: Laserkopf
- 4: Stellvorrichtung
- 5A, 5B: Stelleinheit
- 6A, 6B: Stellbewegung
- 6A',6B': Stellachse
- 7: Stellhebel
- 7A: erster Arm
- 7B: zweiter Arm
- 8: Aufnahme
- 9A: Vorsprung
- 9B: Verschlussmechanismus
- 9C: Klemmvorsprung
- 10: Drehpunkt
- 11: Festkörpergelenk, Biege-Torsionsgelenk
- 11A: ein Ende des Biege-Torsionsgelenks
- 11B: anderes Ende des Biege-Torsionsgelenks
- 12: Schnittpunkt, Brennpunkt
- 13: Versorgungsblock
- 14: Medienkanal

## Patentansprüche

1. Vorrichtung (1) zum Ausrichten der Strahlachse (2) eines Laserkopfes (3), die eine Aufnahme (8) für den Laserkopf (3), eine mindestens eine Stelleinheit (5A, 5B) umfassende Stellvorrichtung (4) zum Ausrichten der Strahlachse (2), sowie einen Stellhebel (7) umfasst, dessen längliche Ausdehnung durch ein Festkörpergelenk (11) in zwei funktionelle Arme (7A, 7B) unterteilt ist, wobei die Aufnahme (8) und die Stellvorrichtung (4) an den gegenüberliegenden Armen (7A, 7B) des Stellhebels (7) angeordnet sind, und wobei die mindestens eine Stelleinheit (5A, 5B) eine Stellachse (6A', 6B') aufweist, die von der Strahlachse (2) verschieden ist.

2. Vorrichtung nach Anspruch 1, wobei sowohl die Stellachse(n) (6A', 6B') als auch die Strahlachse (2) senkrecht zueinander stehen.

3. Vorrichtung nach Anspruch 1 oder 2, wobei das Festkörpergelenk (11) durch ein Biege-Torsionsgelenk gebildet ist, welches an seinem einen Ende (11A) fest mit dem Stellhebel (7) verbunden und mit seinem anderen Ende (11B) an einem Widerlager fixierbar ist.

4. Vorrichtung nach Anspruch 3, wobei das Biege-Torsionsgelenk (11) mindestens einen Medienkanal (14) aufweist.

5. Vorrichtung nach einem der Ansprüche 1 bis 4, wobei die mindestens eine Stelleinheit (5A, 5B) eine Rändelschraube und/oder einen motorischen Antrieb umfasst.

6. Vorrichtung nach einem der Ansprüche 1 bis 5, wobei die Stellvorrichtung (4) lediglich eine Stelleinheit (5A) mit einem Exzenter-Motor umfasst.

7. Vorrichtung nach einem der Ansprüche 1 bis 6, wobei der Drehbereich (10) derart angeordnet ist, dass zwischen Stellvorrichtung (4) und einem Schnittpunkt (12) der Strahlachse (2) des Laserkopfes (3) mit einer Bearbeitungsebene ein Hebelverhältnis von 10:1 herstellbar ist.

8. Vorrichtung nach einem der Ansprüche 5 bis 7, welche ferner eine optische Messeinrichtung zur Bestimmung der Ausrichtung des Laserkopfes (3), und/oder eine Steuerung zur Ansteuerung der Stellvorrichtung (4) umfasst.

9. Verfahren zum Ausrichten der Strahlachse (2) eines Laserkopfes (3) unter Verwendung einer Vorrichtung (1) gemäß Definition in einem der Ansprüche 1 bis 8, wobei das Verfahren folgende Schritte umfasst:
(a) Einbringen des Laserkopfes (3) in die Aufnahme (8);
(b) Bestimmen der Soll-Ist-Abweichung der Strahlachse (2) des Laserkopfes (3);
(c) Bestimmen von zur Verringerung dieser Abweichung notwendigen Stellbewegungen (6A und/oder 6B);
(d) Ausrichten der Strahlachse (2) durch Ansteuern der Stellvorrichtung (4) zur Erzeugung dieser Stellbewegungen (6A und/oder 6B) und Übersetzen der Stellbewegungen (6A und/oder 6B) über die beiden Arme (7A, 7B) des Stellhebels (7) auf den in der Aufnahme (8) angeordneten Laserkopf (3).

10. Verfahren nach Anspruch 9, bei welcher die Soll-Ist-Bestimmung mittels folgender Schritte erfolgt:
(b1) Einbringen von laserbearbeitbarem Material in eine senkrecht zur Strahlachse (2) des Laserkopfes (3) liegende Bearbeitungsebene;
(b2) Ansteuern des Laserkopfes (3), so dass sich in einem Schnittpunkt (12) von Strahlachse (2) und Bearbeitungsebene auf dem laserbearbeitbaren Material eine Markierung ergibt;
(b3) Ermitteln der Ist-Position der Markierung;
(b4) Bestimmen der Abweichung der Ist-Position von einer Sollposition.

11. Verfahren nach Anspruch 9, bei welcher die Soll-Ist-Bestimmung mittels folgender Schritte erfolgt:
(b1) Einbringen einer optischen Messeinrichtung in eine senkrecht zur Strahlachse (2) des Laserkopfes (3) liegende Bearbeitungsebene;
(b2) Ansteuern des Laserkopfes (3), so dass sich in einem Schnittpunkt (12) von Strahlachse (2) und Bearbeitungsebene auf der optischen Messeinrichtung ein Signal der Ist-Position des Schnittpunktes (12) ergibt;
(b3) Bestimmen der Abweichung der Ist-Position von einer Sollposition.

12. Verfahren nach einem der Ansprüche 9 bis 11, wobei in einem nachfolgenden Schritt bestimmt wird, ob die Abweichung der Ist-Position von der Sollposition kleiner als ein vorbestimmter Grenzwert ist, und wobei alle Schritte so oft nacheinander durchgeführt werden, bis der Grenzwert erreicht oder unterschritten wird.

13. Verfahren nach einem der Ansprüche 9 bis 12, wobei das Bestimmen der zur Verringerung der Abweichung notwendigen Stellbewegung(en) und/oder das Ansteuern der Stellvorrichtung (4) automatisiert erfolgt.

14. Verfahren nach einem der Ansprüche 9 bis 13, wobei das Ausrichten der Strahlachse (2) vor und/oder nach dem Einbau des Laserkopfes (3) in eine Produktionsanlage und/oder während des Betriebs in einer Produktionsanlage erfolgt.

15. Verfahren nach Anspruch 14, wobei das Ausrichten der Strahlachse (2) während des fortlaufenden Transports von laserbearbeitbarem Material erfolgt und die Markierung linienförmig ist.

16. Multi-Laserblock für eine Produktionsanlage zur Erzeugung von selektiven Emitterbahnen auf Solarzellen, umfassend eine Mehrzahl nebeneinander angeordneter Vorrichtungen (1) gemäß Definition in einem der Ansprüche 1 bis 8, wobei jede dieser Vorrichtungen (1) der separaten Ausrichtung der jeweiligen Strahlachse (2) dient.
